# EUROPEAN PATENT APPLICATION

(11) **EP 2 933 154 A1**
(43) Date of publication of application: **21.10.2015**
(21) Application number: 15163178.5
(22) Date of filing: 10.04.2015
(51) Int. Cl.: B60S 1/52

(54) **VEHICULAR CLEANING APPARATUS**

(30) Priority: 14.04.2014 JP 2014082985
(71) Applicant: Koito Manufacturing Co., Ltd., Tokyo 108-8711 (JP)
(72) Inventor: Ichikawa, Yasuhiro, Shizuoka-Shi, Shizuoka (JP); Sakai, Masaru, Shizuoka-shi, Shizuoka (JP)
(74) Representative: Finnie, Peter John

(57) **Abstract**

A vehicular cleaning apparatus includes: a nozzle holder (4) having a cleaning liquid feed portion (5) connected to one axial end of a piston (3) movably supported by a cylinder (2) and to which a cleaning liquid having flowed into the cylinder is fed and a nozzle support portion (6) protruding from the cleaning liquid feed portion in a direction different from an axial direction; a nozzle (10) supported by a nozzle support portion and which injects the cleaning liquid to a cleaning target when the nozzle (10) is allowed to protrude out from a vehicle body (100) through a nozzle opening (100a); an attachment bracket (21) that has an attached portion (24) to be attached to an attachment portion (28a) and is coupled to the cylinder; and a nozzle cover (11) coupled to the nozzle holder to open and close the nozzle opening. The attached portion is positioned on a cylinder side with respect to the nozzle support portion. At least a part of the attached portion is positioned on a cleaning liquid feed portion side with respect to a tip of the nozzle support portion in a direction in which the nozzle support portion protrudes from the cleaning liquid feed portion.

## Description

### TECHNICAL FIELD

The present invention relates to a technical field of a vehicular cleaning apparatus that injects a cleaning liquid onto a cleaning target through a nozzle.

### [Related Art Documents]

### [Patent Documents]

### BACKGROUND ART

A vehicular cleaning apparatus is available which is configured such that a part of the apparatus including a nozzle protrudes outward from e a nozzle opening formed in a vehicle body such as a bumper and such that a cleaning liquid is injected to a cleaning target such as a vehicular head lamp through the nozzle to clean the cleaning target.

In such a vehicular cleaning apparatus, a nozzle holder may be coupled to a tip portion of a piston moved in an axial direction relative to a cylinder, the nozzle may be supported by a nozzle holder, and a nozzle cover may be coupled to a tip portion of the nozzle holder (see, for example, Japanese Patent Application Laid-Open (Kokai) No. 2010-228594).

With respect to the vehicular cleaning apparatus described in Japanese Patent Application Laid-Open (Kokai) No. 2010-228594, an attachment bracket is coupled to a cylinder, and the apparatus is attached to a vehicle body using the attachment bracket. In the vehicle body, a shallow recessed portion is formed on a front surface side, a nozzle opening is formed in the recessed portion, and an inner peripheral portion of the recessed portion which is an opening edge of the nozzle opening is formed as an attachment portion. An outward projecting attached portion is provided at a tip portion of the attachment bracket. The attached portion is attached to the attachment portion in an engageable manner, and thus the vehicular cleaning apparatus is attached to the vehicle body.

Furthermore, in some attachment structures for the vehicular cleaning apparatus, a portion corresponding to the recessed portion in Japanese Patent Application Laid-Open (Kokai) No. 2010-228594 is defined by a part of an attachment member referred to as a retainer. In such a structure, the attachment member is provided with an annular coupling surface portion and an annular peripheral portion that is contiguous with an inner peripheral side of the coupling surface portion. The peripheral portion is shaped similarly to the recessed portion in Patent Document land corresponds to the recessed portion. The coupling surface portion is coupled to an inner surface of an outside portion of the nozzle opening by bonding or the like.

In a structure in which the portion corresponding to the recessed portion is thus defined by a part of the attachment member, the inner peripheral portion of the peripheral portion is formed as an attachment portion. The attached portion of the attachment bracket is attached to the attachment portion of the attachment member in an engageable manner, and thus the vehicular cleaning apparatus is attached to the vehicle body via the attachment member.

### SUMMARY OF THE INVENTION

In the above-described vehicular cleaning apparatus, when cleaning is not performed, the nozzle is housed inside the vehicle body, and all the portions of the vehicular cleaning apparatus other than a nozzle cover are closed by the nozzle cover. In this case, one of the portions other than the nozzle cover that is positioned at the outermost peripheral side is the attached portion provided at the tip portion of the attachment bracket. The nozzle cover is sized to close the attached portion and to close the nozzle opening.

Unfortunately, since the attached portion is positioned outside an outer periphery of the nozzle holder, the nozzle opening is large, and thus, the nozzle cover, which closes the nozzle opening, is also large. Consequently, the vehicular cleaning apparatus is large in size.

It is an object of the present invention to solve the above-described problems and to miniaturize the vehicular cleaning apparatus.

First, a vehicular cleaning apparatus according to the present invention that cleans a cleaning target by use of a cleaning liquid delivered from a storage tank disposed inside a vehicle body having a nozzle opening, and that is attached to an attachment portion, includes: a cylinder into which the cleaning liquid delivered from the storage tank flows; a piston supported by the cylinder so as to partly protrude from the cylinder and to be movable in an axial direction; a nozzle holder having an cleaning liquid feed portion connected to one axial end of the piston and to which the cleaning liquid having flowed into the cylinder is fed, and a nozzle support portion protruding from the cleaning liquid feed portion in a direction different from the axial direction; a nozzle supported by the nozzle support portion and which injects the cleaning liquid to the cleaning target when the nozzle is allowed to protrude out from the vehicle body through the nozzle opening; an attachment bracket that has an attached portion to be attached to the attachment portion, and is coupled to the cylinder; and a nozzle cover coupled to the nozzle holder to open and close the nozzle opening. In the vehicular cleaning apparatus, the attached portion is positioned on a cylinder side with respect to the nozzle support portion and at least a part of the attached portion is positioned on a cleaning liquid feed portion side with respect to a tip of the nozzle support portion in a direction in which the nozzle support portion protrudes from the cleaning liquid feed portion. This serves to reduce the size of the nozzle opening.

Second, in the above-described vehicular cleaning apparatus according to the present invention, the attached portion as a whole is desirably positioned on the cleaning liquid feed portion side with respect to the tip of the nozzle support portion in the direction in which the nozzle support portion protrudes from the cleaning liquid feed portion.

This enables a further reduction in the size of the nozzle cover.

Third, in the vehicular cleaning apparatus according to the present invention, an attachment member is desirably attached to the vehicle body, and the attachment member desirably has the attachment portion.

This eliminates the need to provide an attachment portion on the vehicle body.

Fourth, in the vehicular cleaning apparatus according to the present invention, the vehicle body desirably has the attachment portion.

This eliminates the need to provide a dedicated component having the attachment portion.

Fifth, in the vehicular cleaning apparatus according to the present invention, the vehicular cleaning apparatus is inserted from outside of the vehicle body into the nozzle opening while the nozzle cover is coupled to the nozzle holder so that the attached portion is attached to the attachment portion.

This eliminates the need to couple the nozzle cover to the nozzle holder after the attached portion is attached to the attachment portion.

Sixth, a vehicular cleaning apparatus according to another invention that cleans a cleaning target by use of a cleaning liquid delivered from a storage tank disposed inside a vehicle body having a nozzle opening, includes: a cylinder into which the cleaning liquid delivered from the storage tank flows; a piston supported by the cylinder so as to partly protrude from the cylinder and to be movable in an axial direction; a nozzle holder having a cleaning liquid feed portion connected to one axial end of the piston and to which the cleaning liquid having flowed into the cylinder is fed, and a nozzle support portion protruding from the cleaning liquid feed portion in a direction different from the axial direction; a nozzle supported by the nozzle support portion and which injects the cleaning liquid to the cleaning target when the nozzle is allowed to protrude out from the vehicle body through the nozzle opening; an attachment member that has an attachment portion and is attached to the vehicle body; an attachment bracket that has an attached portion to be attached to the attachment portion, and is coupled to the cylinder; and a nozzle cover coupled to the nozzle holder to open and close the nozzle opening. In the vehicular cleaning apparatus, the attached portion is positioned on the cylinder side with respect to the nozzle support portion, and at least a part of the attached portion is positioned on the cleaning liquid feed portion side with respect to a tip of the nozzle support portion in a direction in which the nozzle support portion protrudes from the cleaning liquid feed portion.

This serves to reduce the size of the nozzle opening.

Seventh, in the vehicular cleaning apparatus according to another invention, desirably, the attached portion as a whole is positioned on the cleaning liquid feed portion side with respect to the tip of the nozzle support portion in the direction in which the nozzle support portion protrudes from the cleaning liquid feed portion.

This enables a further reduction in the size of the nozzle cover.

According to the present invention, on the cylinder side with respect to the nozzle support portion, at least a part of the attached portion is positioned on the cleaning liquid feed portion side with respect to the tip of the nozzle support portion in the direction in which the nozzle support portion protrudes from the cleaning liquid feed portion. This serves to reduce the size of the nozzle opening, enabling the vehicular cleaning apparatus to be miniaturized.

### BRIEF DESCRIPTION OF THE DRAWINGS

An embodiment of a vehicular cleaning apparatus according to the present invention will be described with reference to the attached drawings, in which:
[FIG. 1] FIG. 1 is a cross-sectional view of a vehicular cleaning apparatus shown with a bumper and an attachment member, showing an embodiment of the vehicular cleaning apparatus according to the present invention along with FIGS. 2 to 4.
[FIG. 2] FIG. 2 is an exploded perspective view of the vehicular cleaning apparatus.
[FIG. 3] FIG. 3 is a partially cross-sectional side view showing that a cleaning target is being cleaned by the vehicular cleaning apparatus.
[FIG. 4] FIG. 4 is a cross-sectional view of the vehicular cleaning apparatus shown with the bumper provided with an attachment portion.

### DETAILED DESCRIPTION

An example is illustrated below in which the vehicular cleaning apparatus according to the present invention is applied to a cleaning apparatus for vehicular lamps. The application of the vehicular cleaning apparatus according to the present invention is not limited to the cleaning apparatus for vehicular lamps but is widely applicable as a vehicular cleaning apparatus that cleans portions such as a vehicle body, windows, and mirrors which are provided in a vehicle and which may be cleaning targets. Furthermore, the vehicular cleaning apparatus can be attached to portions composing a part of the vehicle besides the vehicle body including a bumper and vehicular lamps such as headlamps, but an example is illustrated below in which the vehicular cleaning apparatus is attached to a bumper. The vehicular cleaning apparatus is disposed, for example, in an orientation in which the apparatus extends in a front-back direction.

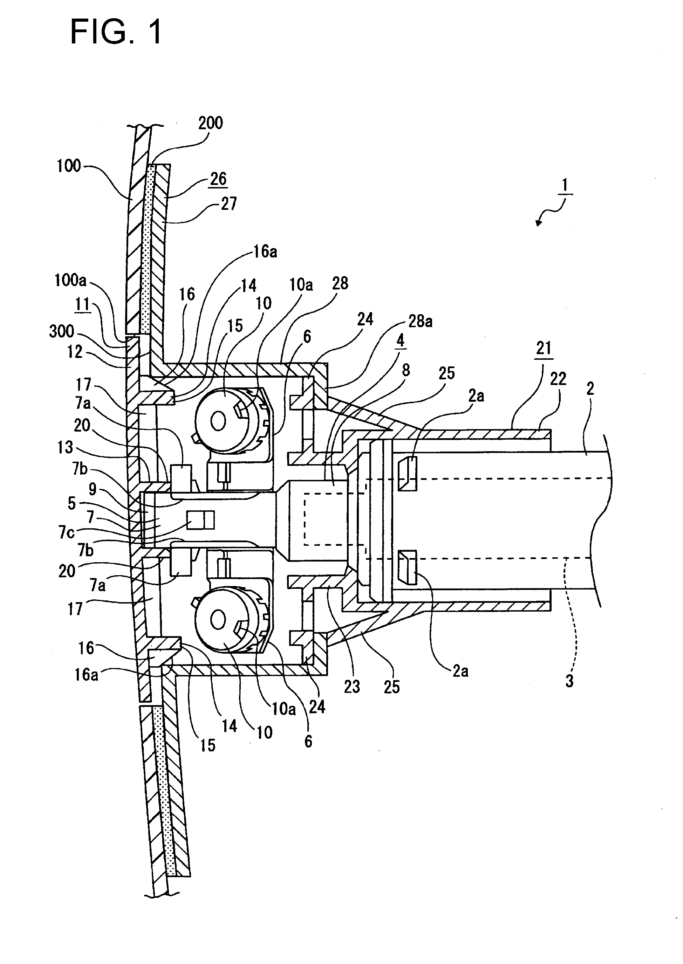

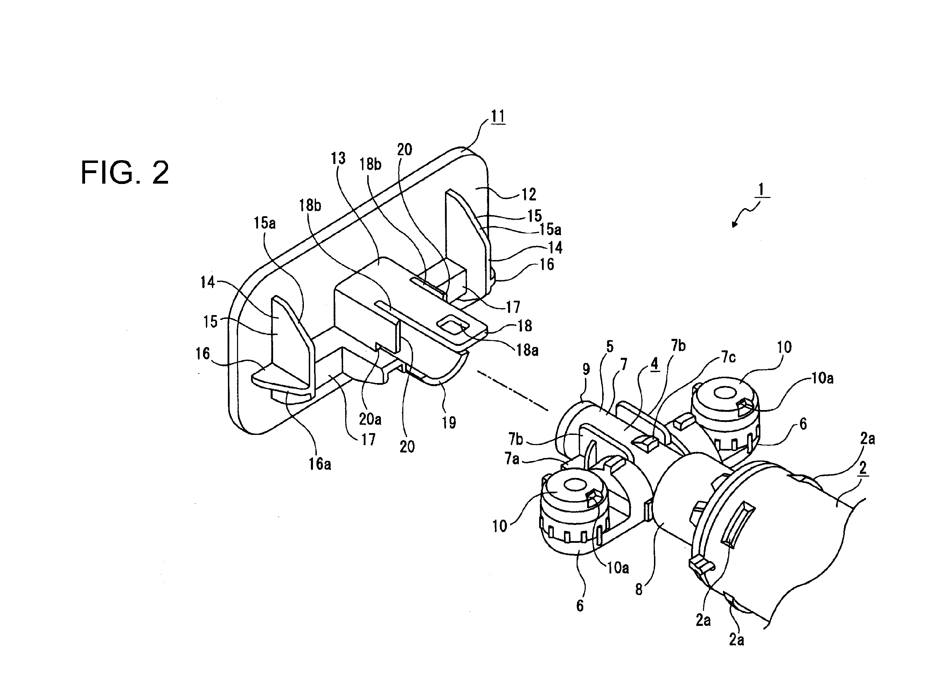

A vehicular cleaning apparatus 1 includes a cylinder 2, a piston 3 supported by the cylinder 2 so as to be movable in an axial direction (front-back direction), and a nozzle holder 4 connected to a front end of the piston 3 (see FIG. 1 and FIG. 2).

The cylinder 2 is formed in a generally cylindrical shape extending in the front-back direction, and includes a connection tube (not shown) connected to a rear end of the cylinder 2. The connection tube is connected to a storage tank (not shown) in which a cleaning liquid is stored and which is disposed inside the vehicle body. Thus, the cleaning liquid delivered from the storage tank flows into the cylinder 2 via the connection tube. Coupling protruding portions 2a, 2a, ... are provided at a position close to a front end of the cylinder 2 so as to be separated from one another in a circumferential direction.

The piston 3 is formed in a generally cylindrical shape. While the vehicular cleaning apparatus 1 is not performing cleaning, the whole piston 3 except for a front end thereof is inserted into the cylinder 2.

With the piston 3 supported by the cylinder 2, a seal element (not shown) attached to the front end of the cylinder 2 is kept in tight contact with the cylinder 2 to prevent the cleaning liquid from leaking from the cylinder 2. When the piston 3 is moved in the front-back direction relative to the cylinder 2, the seal element is slidably moved by an outer peripheral surface of the piston 3.

With the piston 3 supported by the cylinder 2, an extension coil spring (not shown) is supported between the cylinder 2 and the piston 3. Thus, the piston 3 is biased backward relative to the cylinder 2 by the extension coil spring. While the vehicular cleaning apparatus 1 is not performing cleaning, the piston 3 is held at a rear movement end by the bias force of the extension coil spring, and this position is a housed position of the piston 3. At the housing position, the front end of the piston 3 protrudes forward from the cylinder 2.

The cleaning liquid having flowed into the cylinder 2 flows into the piston 3.

The nozzle holder 4 has a cleaning liquid feed portion 5 and a pair of nozzle support portions 6, 6.

The cleaning liquid feed portion 5 has a generally cylindrical holding coupling portion 7 extending in the front-back direction and a generally cylindrical coupling protruding portion 8 contiguous with a rear end of the holding coupling portion 7. The outer diameter of the coupling protruding portion 8 is slightly larger than the outer diameter of the holding coupling portion 7. The coupling protruding portion 8 is coupled to the front end of the piston 3.

The holding coupling portion 7 is closed by a cover member 9 attached to a front end of the holding coupling portion 7. A valve (not shown) is disposed inside the holding coupling portion 7. The cleaning liquid having flowed into the piston 3 is fed to the cleaning liquid feed portion 5. The pressure of the cleaning liquid causes the valve to be opened, allowing the cleaning liquid to flow into the nozzle support portions 6,6.

Plate-like rotation regulating portions 7a, 7a protruding sideward (outward) and facing the vertical direction are provided at laterally opposite ends of the holding coupling portion 7. Plate-like guide portions 7b, 7b protruding upward and facing the lateral direction are provided at laterally opposite ends of the holding coupling portion 7. An engaging protruding portion 7c which protrudes upward is provided at an upper end of the holding coupling portion 7.

The nozzle support portions 6, 6 protrude leftward and rightward, respectively, from a rear end of the holding coupling portion 7. Internal spaces in the nozzle support portions 6, 6 are each in communication with an internal space in the holding coupling portion 7.

Nozzles 10, 10 are supported by the nozzle support portions 6, 6, respectively, at outer ends thereof. Ejection ports 10a, 10a through which the cleaning liquid is injected are formed in the nozzles 10, 10.

A nozzle cover 11 is coupled to the nozzle holder 4. The nozzle cover 11 includes a cover portion 12, a coupling portion 13, lead-in portions 14, 14, and protruding piece portions 17, 17 all of which are integrated together.

The cover portion 12 is formed in a horizontally long generally flat plate shape oriented in the front-back direction.

The coupling portion 13 is positioned on an inner surface (rear surface) side of the cover portion 12 in a central portion thereof in a lateral direction. The coupling portion 13 includes an upper surface portion 18, a lower surface portion 19, and side surface portions 20, 20.

An engaging hole 18a is formed at a position on the upper surface portion 18 close to a rear end thereof so as to penetrate the upper surface portion 18 in a vertical direction. Slit-like guided portions 18b, 18b that are open forward are formed in a substantially central portion of the upper surface portion 18 in the front-back direction so as to be separated from each other in the lateral direction.

The lower surface portion 19 is formed in a downward-protruding gently circular arc shape.

Slit-like regulated portions 20a, 20a that are open forward are formed at lower edges of the side potions 20, 20, respectively.

The lead-in portions 14, 14 are positioned so as to be separated from each other in the lateral direction with respect to the coupling portion 13, and protrude backward from the cover portion 12.

The lead-in portion 14 includes a first piece portion 15 facing in the lateral direction and a second piece portion 16 protruding sideward (outward) from an outer surface of the first piece portion 15 and facing in the vertical direction. Inclined edges 15a, 15a that vertically approach each other as they extend backward are formed on the first piece portion 15 so as to be separated from each other in the vertical direction. An inclined edge 16a that approaches the first piece portion 15 as the inclined edge 16a extends in the backward direction is formed on the second piece portion 16.

Each of the protruding piece portions 17, 17 is positioned between the coupling portion 13 and a corresponding one of the lead-in portions 14, 14, and is contiguous with the coupling portion 13 and the corresponding one of the lead-in portions 14, 14 at laterally opposite ends of the protruding piece portion 17.

The nozzle cover 11 is coupled to the nozzle holder 4 by being moved backward relative to the nozzle holder 4 to fit the coupling portion 13 into the holding coupling portion 7.

The nozzle cover 11 is coupled to the nozzle holder 4 by inserting the guide portions 7b, 7b of the nozzle holder 4 into the respective guided portions 18b, 18b of the coupling portion 13 to guide the nozzle cover 11 to the nozzle holder 4 and engage the engaging protruding portion 7c with the engaging hole 18a. With the nozzle cover 11 coupled to the nozzle holder 4, the holding coupling portion 7 of the nozzle holder 4 is inserted into the coupling portion 13 of the nozzle cover 11. At this time, the rotation regulating portions 7a, 7a of the nozzle holder 4 are inserted into the respective regulated portions 20a, 20a of the nozzle cover 11 to regulate the rotation of the nozzle cover 11 with respect to the nozzle holder 4, that is, the rotation around the axis of the piston 3.

An attachment bracket 21 is coupled to the front end of the cylinder 2 (see FIG. 1). The attachment bracket 21 has a generally cylindrical tubular coupling portion 22, a generally cylindrical connection portion 23 protruding forward from the tubular coupling portion 22, attached portions 24, 24 ... protruding sideward (outward) from a front end of the connection portion 23, and engaging piece portions 25, 25 ... protruding obliquely forward and outward from an outer peripheral surface of the tubular coupling portion 22.

A plurality of coupling holes (not shown) is formed in the tubular coupling portion 22 so that the coupling holes are separated from one another in the circumferential direction. The connection portion 23 has an outer diameter slightly smaller than the outer diameter of the tubular coupling portion 22. The attached portions 24, 24, ... and the engaging piece portions 25, 25, .. are provided such that the attached portions 24, 24, ... are separated from the engaging piece portions 25, 25 ... in the circumferential direction.

The attachment bracket 21 is coupled to the front end of the cylinder 2 in an external fitting manner by inserting the coupling protruding portions 2a, 2a, ... into the respective coupling holes in the tubular coupling portion 22. At this time, the connection portion 23 is positioned on an outer peripheral side of the coupling protruding portion 8.

The vehicular cleaning apparatus 1 configured as described above is attached to a bumper 100 via an attachment member 26. A horizontally long nozzle opening 100a penetrating the bumper 100 in the front-back direction is formed in the bumper 100.

The attachment member 26 is a member referred to as a retainer and includes an annular coupling surface portion 27 and an annular circumferential portion 28 protruding backward from an inner peripheral edge of the coupling surface portion 27. An inward-projecting flange-like attachment portion 28a is provided at a rear end of the circumferential portion 28. The size of inner periphery of the coupling surface portion 27 is slightly smaller than the inner periphery of the nozzle opening 100a formed in the bumper 100.

The whole attachment member 26 except for an inner peripheral portion of the coupling surface portion 27 is coupled to an inner surface (rear surface) of the bumper 100 around the nozzle opening 100a with a double-sided adhesive tape 200 or the like. With the attachment member 26 coupled to the bumper 100, the inner peripheral surface of the bumper 100 and the inner peripheral surface of the coupling surface portion 27 form an annular placement recessed portion 300 inside the nozzle opening 100a.

With the nozzle cover 11 coupled to the nozzle holder 4 and the attachment bracket 21 coupled to the cylinder 2, the vehicular cleaning apparatus 1 is attached to the bumper 100 by being inserted into the nozzle opening 100a from the front.

The vehicular cleaning apparatus 1 is attached to the bumper 100 via the attachment member 26 as follows. While the vehicular cleaning apparatus 1 is being inserted from the front, the engaging piece portions 25, 25, ... of the attachment bracket 21 are slidably moved by an inner peripheral surface of the attachment portion 28a and elastically deformed so as to be displaced inward, and are elastically recovered upon passing over the attachment portion 28a. The attachment bracket 21 is attached to the attachment member 26 so that the attachment portion 28a is sandwiched between the attached portions 24, 24, ... and the engaging piece portions 25, 25, ... in the front-back direction.

Furthermore, when the vehicular cleaning apparatus 1 is inserted into the nozzle opening 100a from the front, the inclined edges 15a, 15a, ..., 16a, 16a, ... formed on the lead-in portions 14, 14 are slidably moved by the inner peripheral edge of the coupling surface portion 27 of the attachment member 26 to guide the nozzle cover 11, and thus the first piece portions 15, 15 and the second piece portions 16, 16 are engaged with the inner peripheral edge of the coupling surface portion 27. Accordingly, the nozzle cover 11 is positioned with respect to the attachment member 26 and held in a predetermined position. The cover portion 12 is inserted and placed in the placement recessed portion 300 to close the nozzle opening 100a. A front surface of the cover portion 12 and a front surface of the bumper 100 are positioned so as to be substantially flush with each other.

As described above, with the vehicular cleaning apparatus 1 attached to the bumper 100 via the attachment member 26, the circumferential portion 28 of the attachment member 26 is positioned close to the nozzles 10, 10 on an outer peripheral side of the nozzle holder 4. At this time, the whole attached portions 24, 24, ... of the attachment bracket 21 except for outer ends of the attached portions 24, 24, ... are positioned in a space behind the nozzle support portions 6, 6 between a left end of the left nozzle support portion 6 and a right end of the right nozzle support portion 6. Accordingly, regarding the attachment portion 28a of the attachment member 26 to which the attached portions 24, 24, ... are attached , the whole of the attachment portion 28a except for an outer end thereof is also positioned in the space behind the nozzle support portions 6, 6 between the left end of the left nozzle support portion 6 and the right end of the right nozzle support portions 6.

In the vehicular cleaning apparatus 1, the attached portions 24, 24, ... of the attachment bracket 21 may be configured such that the whole attached portions 24, 24, ... are positioned in the space behind the nozzle support portions 6, 6 between the left end of the left nozzle support portion 6 and the right end of the right nozzle support portion 6. Furthermore, the attachment portion 28a of the attachment member 26 may also be configured such that the whole attachment portion 28a is positioned in the space behind the nozzle support portions 6, 6 between the left end of the left nozzle support portion 6 and the right end of the right nozzle support portion 6.

Although in the above example the engaging piece portions 25, 25, ... of the attachment bracket 21 are elastically deformed to couple the attachment member 26 and the attachment bracket 21 together, the attachment member 26 and the attachment bracket 21 may be coupled together by any means other than engagement based on elastic deformation such as screwing or bonding.

Moreover, the vehicular cleaning apparatus 1 can be directly attached to the bumper 100 by bonding or the like without the use of the attachment member 26 or the attachment bracket 21. However, if the vehicular cleaning apparatus 1 is attached directly to the bumper 100, it is difficult to remove the vehicular cleaning apparatus 1 from the bumper 100 because the bonding is firm attachment means. Since this results in poor maintainability of the vehicular cleaning apparatus 1, the vehicular cleaning apparatus 1 is desirably attached to the bumper 100 via the attachment member 26.

As described above, with the nozzle cover 11 coupled to the nozzle holder 4, the vehicular cleaning apparatus 1 is inserted into the nozzle opening 100a from outside the bumper 100, and the attached portions 24, 24, ... are attached to the attachment portion 28a.

This eliminates the need to couple the nozzle cover 11 to the nozzle holder 4 after the attached portions 24, 24, ... are attached to the attachment portion 28a. Thus, an operation of attaching the vehicular cleaning apparatus 1 to the bumper 100 can be easily performed. Furthermore, since the attachment of the vehicular cleaning apparatus 1 is carried out by inserting the vehicular cleaning apparatus 1 into the nozzle opening 100a from the outside and front side of the bumper 100, the attachment operation is easy. This improves the operability of the attachment operation.

Furthermore, in the vehicular cleaning apparatus 1, the nozzle holder 4 is biased backward by the extension coil spring supported between the cylinder 2 and the piston 3, and the nozzle cover 11 is also biased backward along with the nozzle holder 4. Thus, with the vehicular cleaning apparatus 1 attached to the bumper 100 via the attachment member 26, the first piece portions 15, 15 of the nozzle cover 11 and the second piece portions 16, 16 of the nozzle cover 11 are pressed against the inner peripheral edge of the coupling surface portion 27.

Therefore, possible backlash of the nozzle cover 11 against the attachment member 26 is prevented, allowing the vehicular cleaning apparatus 1 to be stably attached to the bumper. Furthermore, the operation of inserting the vehicular cleaning apparatus 1 through the nozzle opening 100a serves to prevent backlash. This eliminates the need for a special operation for preventing backlash and allows the prevention of backlash of the vehicular cleaning apparatus 1 with the operability improved.

As described above, in the housed state where the vehicular cleaning apparatus 1 attached to the bumper 100 via the attachment member 26 is housed inside the vehicle, the piston 3 is biased backward by the bias force of the extension coil spring to cause the nozzle cover 11 to close the nozzle opening 100a (see FIG. 1). At this time, the valve disposed inside the nozzle holder 4 is closed.

In the above-described housed state, when the cleaning liquid flows from the storage tank into the piston 3 through the cylinder 2 via the connection tube, the cleaning liquid is fed into the cleaning liquid feed portion 5 of the nozzle holder 4. At this time, since the valve is closed, the cleaning liquid does not flow into the nozzle support portions 6, 6 of the nozzle holder 4 before an internal pressure rises.

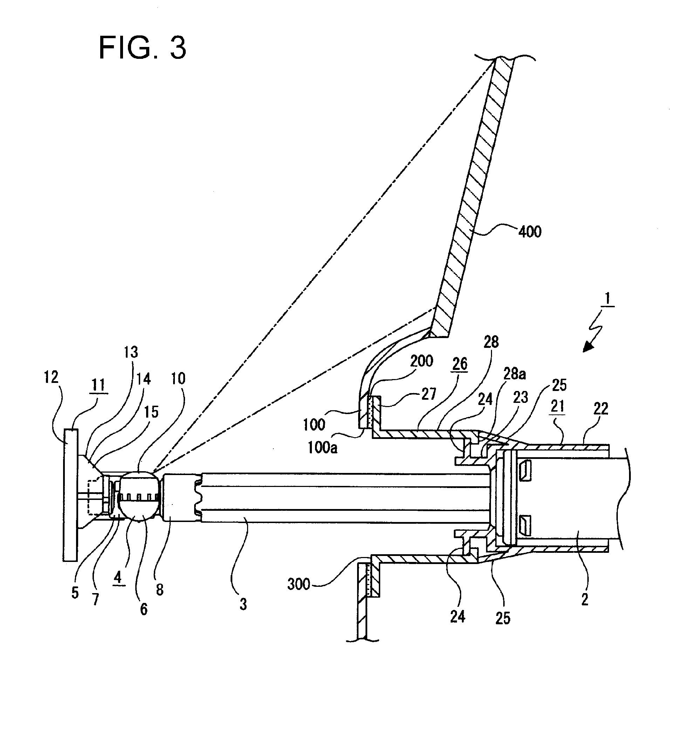

When the cleaning liquid flows into the cleaning liquid feed portion 5, the fed cleaning liquid elevates the internal pressure of the cylinder 2 to extend the extension coil spring, causing the piston 3 to protrude forward from the cylinder 2. As the piston 3 moves forward, the nozzle holder 4 and the nozzle cover 11 integrally move forward (see FIG. 3). The nozzle holder 4 is moved forward to open the nozzle opening 100a in the bumper 100, and the nozzle holder 4 protrudes forward from the nozzle opening 100a.

When the piston 3 moves to the front movement end, the subsequently fed cleaning liquid further elevates the internal pressure of the nozzle holder 4 to open the valve, and the cleaning liquid flows from the cleaning liquid feed portion 5 into the nozzle support portions, 6, 6. The cleaning liquid is injected to a cover 400 for the vehicular head lamp through the injection ports 10a, 10a of the nozzles 10, 10 so that the cover 400 is cleaned with the injected cleaning liquid.

When the feeding of the cleaning liquid from the storage tank is stopped, the internal pressure lowers to close the valve, and the injection of the cleaning liquid through the nozzles 10, 10 is stopped. The internal pressure further lowers, and the piston 3, the nozzle holder 4, and the nozzle cover 11 are moved backward by the bias force of the extension coil spring, which results in the housed state again (see FIG. 1).

As described above, in the vehicular cleaning apparatus 1, at least parts of attached portions 24, 24, ... of the attachment bracket 21 are positioned, on the cylinder 2 side with respect to the nozzle support portions 6, 6, between the left end of the left nozzle support portion 6 and the right end of the right nozzle support portion 6.

Accordingly, the size of the nozzle opening 100a in the bumper 100 is reduced, which allows a reduction in the size of the nozzle cover 11 that opens and closes the nozzle opening 100a. Thus , the vehicular cleaning apparatus 1 can be miniaturized.

Furthermore, the whole attached portions 24, 24, ... of the attachment bracket 21 are positioned, on the cylinder 2 side with respect to the nozzle support portions 6, 6, between the left end of the left nozzle support portion 6 and the right end of the right nozzle support portion 6. This configuration enables a further reduction in the size of the nozzle cover 11, and thus the vehicular cleaning apparatus 1 can be further miniaturized.

Moreover, the attachment member 26 is attached to the bumper 100, and the attachment portion 28a is provided on the attachment member 26. This eliminates the need to provide an attachment portion on the bumper 100, and thus the structure of the vehicle body can be simplified.

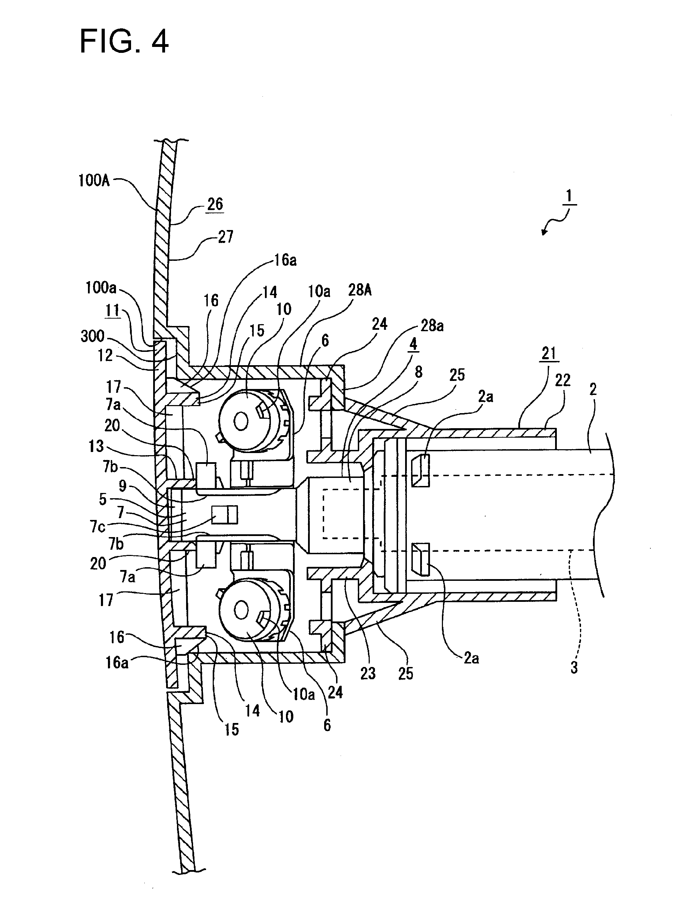

Although in the above example the vehicular cleaning apparatus 1 is attached to the bumper 100 via the attachment member 26, as shown in FIG. 4, the vehicular cleaning apparatus 1 may be provided with the a circumferential portion 28A having the attachment portion 28a and integrated with a vehicle body such as a bumper 100A, and the placement recessed portion 300 may be formed in the vehicular cleaning apparatus 1.

In this case, a dedicated component (attachment member) with the attachment portion 28a need not be provided, and thus, peripheral structures of the vehicular cleaning apparatus 1 can be simplified.

Furthermore, although in the above example the attachment member 26 is a member different from the members included in the vehicular cleaning apparatus 1, the attachment member 26 may be a member included in the vehicular cleaning apparatus 1.

## Claims

1. A vehicular cleaning apparatus that cleans a cleaning target by use of a cleaning liquid delivered from a storage tank disposed inside a vehicle body having a nozzle opening, and that is attached to an attachment portion, the vehicular cleaning apparatus comprising:
a cylinder into which the cleaning liquid delivered from the storage tank flows;
a piston supported by the cylinder so as to partly protrude from the cylinder and to be movable in an axial direction;
a nozzle holder including a cleaning liquid feed portion connected to one axial end of the piston and to which the cleaning liquid having flowed into the cylinder is fed, and a nozzle support portion protruding from the cleaning liquid feed portion in a direction different from the axial direction;
a nozzle supported by the nozzle support portion and which injects the cleaning liquid to the cleaning target when the nozzle is allowed to protrude out from the vehicle body through the nozzle opening;
an attachment bracket that has an attached portion to be attached to the attachment portion and is coupled to the cylinder; and
a nozzle cover coupled to the nozzle holder to open and close the nozzle opening, wherein
the attached portion is positioned on a cylinder side with respect to the nozzle support portion, and
at least a part of the attached portion is positioned on a cleaning liquid feed portion side with respect to a tip of the nozzle support portion in a direction in which the nozzle support portion protrudes from the cleaning liquid feed portion.

2. The vehicular cleaning apparatus according to claim 1, wherein
the attached portion as a whole is positioned on the cleaning liquid feed portion side with respect to the tip of the nozzle support portion in the direction in which the nozzle support portion protrudes from the cleaning liquid feed portion.

3. The vehicular cleaning apparatus according to claim 1 or 2, wherein
an attachment member is attached to the vehicle body, and
the attachment member has the attachment portion.

4. The vehicular cleaning apparatus according to claim 1 or 2, wherein
the vehicle body has the attachment portion.

5. The vehicular cleaning apparatus according to claim 1, 2, 3, or 4, wherein
the vehicular cleaning apparatus is inserted from outside of the vehicle body into the nozzle opening while the nozzle cover is coupled to the nozzle holder so that the attached portion is attached to the attachment portion.

6. A vehicular cleaning apparatus that cleans a cleaning target by use of a cleaning liquid delivered from a storage tank disposed inside a vehicle body having a nozzle opening, the vehicular cleaning apparatus comprising:
a cylinder into which the cleaning liquid delivered from the storage tank flows;
a piston supported by the cylinder so as to partly protrude from the cylinder and to be movable in an axial direction;
a nozzle holder including a cleaning liquid feed portion connected to one axial end of the piston and to which the cleaning liquid having flowed into the cylinder is fed, and a nozzle support portion protruding from the cleaning liquid feed portion in a direction different from the axial direction;
a nozzle supported by the nozzle support portion and which injects the cleaning liquid to the cleaning target when the nozzle is allowed to protrude out from the vehicle body through the nozzle opening;
an attachment member that has an attachment portion and is attached to the vehicle body;
an attachment bracket that has an attached portion to be attached to the attachment portion, and is coupled to the cylinder; and
a nozzle cover coupled to the nozzle holder to open and close the nozzle opening, wherein
the attached portion is positioned on the cylinder side with respect to the nozzle support portion, and
at least a part of the attached portion is positioned on a cleaning liquid feed portion side with respect to a tip of the nozzle support portion in a direction in which the nozzle support portion protrudes from the cleaning liquid feed portion.

7. The vehicular cleaning apparatus according to claim 6, wherein
the attached portion as a whole is positioned on the cleaning liquid feed portion side with respect to the tip of the nozzle support portion in the direction in which the nozzle support portion protrudes from the cleaning liquid feed portion.
